# EUROPÄISCHE PATENTSCHRIFT

(11) **EP 3 392 731 B1**
(45) Veröffentlichungstag und Bekanntmachung des Hinweises auf die Patenterteilung: **26.07.2023**
(21) Anmeldenummer: 18166796.5
(22) Anmeldetag: 11.04.2018
(51) Int. Cl.: G05D 1/02

(54) **VERFAHREN ZUM BETRIEB EINES SYSTEMS AUS SELBSTFAHRENDEN BODENBEARBEITUNGSGERÄTEN**
METHOD FOR OPERATING A SYSTEM COMPOSED OF SELF-PROPELLED SOIL WORKING VEHICLES
PROCÉDÉ DE FONCTIONNEMENT D'UN SYSTÈME DE VEHICULES AUTONOMES DE TRAITEMENT DES SOLS

(30) Priorität: 19.04.2017 DE 102017003735
(43) Veröffentlichungstag der Anmeldung: 24.10.2018
(73) Patentinhaber: Andreas Stihl AG & Co. KG, 71336 Waiblingen (DE)
(72) Erfinder: Matt, Sebastian, 6330 Kufstein (AT); Zöttl, Samuel, 6092 Birgitz (AT); Horngacher, Christian, 6365 Kirchberg in Tirol (AT)
(74) Vertreter: Wasmuth, Rolf

(56) Entgegenhaltungen:
- EP-A2- 2 631 731
- DE-A1-102015 114 568
- US-A1- 2015 289 743
- BLENDER TIMO ET AL: "Managing a Mobile Agricultural Robot Swarm for a seeding task", IECON 2016 - 42ND ANNUAL CONFERENCE OF THE IEEE INDUSTRIAL ELECTRONICS SOCIETY, IEEE, 23. Oktober 2016 (2016-10-23), Seiten 6879-6886, XP033033840, DOI: 10.1109/IECON.2016.7793638 [gefunden am 2016-12-21]

## Beschreibung

Die Erfindung betrifft ein Verfahren zum Einrichten und Betrieb eines Systems aus mindestens einem ersten und einem zweiten selbstfahrenden Bodenbearbeitungsgerät zur gemeinsamen Bearbeitung eines vorgegebenen Arbeitsbereichs. Ein einzelnes Bodenbearbeitungsgerät fährt innerhalb des Arbeitsbereichs selbstständig einen zufälligen Weg ab, wozu jedes Bodenbearbeitungsgerät einen eigenen Antrieb, eine eigene Steuereinheit und einen geräteeigenen Akku zur Energieversorgung aufweist. Die Steuereinheit eines Bodenbearbeitungsgerätes umfasst einen Speicher für zumindest eine Betriebsvariable, wobei das System zumindest eine Basisstation zur Kommunikation mit den Bodenbearbeitungsgeräten aufweist.

Selbstfahrende, akkubetriebene Bodenbearbeitungsgeräte sind beispielsweise als sogenannte Robotermäher bekannt. Der Arbeitsbereich eines derartigen Robotermähers kann beispielsweise durch einen Randbegrenzungsdraht abgegrenzt sein, der eine geschlossene Drahtschleife bildet, deren Enden mit einer Sendeeinheit verbunden sind. Die Sendeeinheit sendet Signale vorgegebener Frequenz oder Form auf den Randbegrenzungsdraht, wobei die Signale von einer Empfangseinheit im Robotermäher empfangen und ausgewertet werden. Über die Drahtsignale auf dem Randbegrenzungsdraht kann der Robotermäher erkennen, ob er innerhalb oder außerhalb des vom Randbegrenzungsdraht umgebenen Arbeitsbereiches fährt.

Aus der DE 20 2013 101 894 U1 ist ein System aus mehreren Robotermähern bekannt, die einen vorgegebenen gemeinsamen Arbeitsbereich bearbeiten. Die Einrichtung und der Betrieb eines derartigen Systems aus mehreren Robotermähern für einen Arbeitsbereich sind zeitaufwendig. Treten Störungen auf, muss der Benutzer eingreifen, um den Betrieb des Systems zu gewährleisten.

Die EP 2 631 731 A2 beschreibt ein System aus mehreren Robotermähern und einer Ladestation mit einer Sendeeinheit, die während dem Betrieb des Systems durch den Benutzer ausgelöste Steuerungsbefehle an einzelne oder alle Bodenbearbeitungsgeräte ausgibt. Diese Steuerungsbefehle können ein NOT-AUS, ein Rückkehrbefehl oder dergleichen sein. Wird ein Bodenbearbeitungsgerät zum Aufladen des Akkus zur Ladestation gerufen, kann ein im Arbeitsbereich verbleibendes Bodenbearbeitungsgerät seinen Aktionsradius zeitweise auf den gesamten Arbeitsbereich ausdehnen.

Die US 2015/289743 A1 offenbart ein in Räumen eingesetztes System aus einer Zentrale und mehreren Saugrobotern, bei der die Zentrale den Startbefehl einer Reinigung gibt und dann im permanenten Datenaustausch mit den Bodenbearbeitungsgeräten steht, um aktuelle Reinigungszustände zu erfassen und abhängig von diesen den Saugrobotern Steuerungsbefehle zu übermitteln, um zum Beispiel bei unvollständiger Reinigung des Bodens durch einen ersten Saugroboter einen zweiten Saugroboter zur Säuberung an den gemeldeten Ort zu dirigieren.

Der Erfindung liegt die Aufgabe zugrunde, ein Verfahren zum Einrichten und Betrieb eines Systems aus einer Basisstation und mehreren Bodenbearbeitungsgeräten anzugeben, welches in einfacher Weise einzurichten ist und im Betrieb das Systems zur Senkung der Gesamtarbeitszeit ohne Eingriffe durch einen Benutzer effektiv arbeitet.

Die Aufgabe wird nach den Merkmalen des Anspruchs 1 gelöst.

Die zur Einrichtung und Inbetriebnahme des Systems aus mehreren Bodenbearbeitungsgeräten notwendige Information über eine in einem Bodenbearbeitungsgerät abgelegte Betriebsvariable wird von dem System selbstständig an weitere Bodenbearbeitungsgeräte übertragen. Ein Bodenbearbeitungsgerät wird unabhängig von einem anderen Bodenbearbeitungsgerät unter Verwendung der Betriebsvariablen autonom einen zufälligen Weg innerhalb des Arbeitsbereiches abfahren. Im Betrieb des Systems wird ferner das Verhalten eines einzelnen Bodenbearbeitungsgerätes in Abhängigkeit von Änderungen der Betriebsvariablen angepasst, die die Basisstation allen Bodenbearbeitungsgeräten neu übermittelt.

Zum Einrichten des Systems muss der Benutzer nur einmal die Informationen zur Betriebsvariablen, insbesondere für nur ein Bodenbearbeitungsgerät, eingeben. Das System selbst wird die Informationen zur eingegebenen Betriebsvariablen bzw. die Betriebsvariable selbst an alle weiteren Bodenbearbeitungsgeräte des Systems verteilen. Der Benutzer muss die Informationen zur Betriebsvariablen unabhängig von der Anzahl der Bodenbearbeitungsgeräte im System nur einmal festlegen.

Die Einrichtung des Systems aus mehreren Bodenbearbeitungsgeräten wird über ein externes Eingabegerät vorgenommen. Das externe Eingabegerät kann beispielsweise ein mobiles Endgerät wie beispielsweise ein Smartphone, ein Tablet-PC oder eine Smartwatch oder dgl. sein. Auf dem externen Eingabegerät ist eine Benutzer-App installiert, welche den Benutzer über den Bildschirm des externen Eingabegeräts in einfacher Weise durch den Installationsvorgang des Systems leitet. Der Benutzer gibt die Daten über ein Eingabefeld in der Benutzer-App, beispielsweise auf seinem Smartphone oder einem anderen externen Eingabegerät, ein. Das Eingabefeld kann beispielsweise ein Touchscreen oder eine Tastatur sein. Nach Abschluss der Eingabe werden die Daten von dem externen Eingabegerät drahtlos an die Basisstation übermittelt, welche die Betriebsvariable auf alle Bodenbearbeitungsgeräte des Systems verteilt. Zur Datenübermittlung können WLAN, NFC, Bluetooth, GSM oder dgl. Funkstandards genutzt werden.

Nach der Inbetriebnahme des Systems melden die im System arbeitenden Bodenbearbeitungsgeräte ihre jeweiligen Betriebszustände an die Basisstation, welche unter Berücksichtigung der gemeldeten Betriebszustände angepasste Betriebsvariable bestimmt und diese angepasste Betriebsvariable den im System arbeitenden Bodenbearbeitungsgeräten drahtlos übermittelt. Während dem Betrieb des Systems werden die Betriebsvariablen kontinuierlich in Abhängigkeit der Betriebszustände der Bodenbearbeitungsgeräte angepasst, wodurch die technisch mögliche Gesamtleistung des Systems optimal ausgeschöpft werden kann.

Um die Eingriffe eines Benutzers während dem Betrieb des Systems zu reduzieren, ist vorgesehen, das Verhalten eines einzelnen Bodenbearbeitungsgerätes in Abhängigkeit von Änderungen der Betriebsvariablen anzupassen. Diese geänderte Betriebsvariable kann von der Basisstation bestimmt und an alle Bodenbearbeitungsgeräte des Systems verteilt werden.

Die Werte der Betriebsvariablen für den Betrieb eines Bodenbearbeitungsgerätes werden jeweils in einem Speicher eines Bodenbearbeitungsgerätes abgelegt. Die Steuereinheit des Bodenbearbeitungsgerätes wird in Abhängigkeit der Informationen der Betriebsvariablen das Bodenbearbeitungsgerät autonom und unabhängig von anderen Bodenbearbeitungsgeräten steuern und betreiben.

Die einzelnen Bodenbearbeitungsgeräte melden ihren jeweils aktuellen Betriebszustand an die Basisstation. Die Basisstation hat somit jederzeit Kenntnis von der Betriebsbereitschaft und dem aktuellen Betrieb eines Bodenbearbeitungsgerätes. Fällt ein Bodenbearbeitungsgerät z. B. wegen geringer Akkuladung oder einer Störung aus, wird dies von dem betroffenen Bodenbearbeitungsgerät der Basisstation gemeldet. Die Basisstation erkennt den Ausfall und wird den Wert der aktuellen Betriebsvariablen in Abhängigkeit des Ausfalls und der gemeldeten Betriebszustände der Bodenbearbeitungsgeräte anpassen. Insbesondere kann die Information über die Betriebsdauer der Bodenbearbeitungsgeräte leicht angepasst werden, wenn eines der Bodenbearbeitungsgeräte des Systems ausfällt. Das Arbeitsergebnis - z. B. vollständiges Mähen einer Rasenfläche - kann so durch Anheben der Betriebszeit der verbleibenden Bodenbearbeitungsgeräte ohne Eingriff durch einen Benutzer sicher erreicht werden.

Die von der Basisstation angepassten Werte der Betriebsvariablen werden den einzelnen im System arbeitenden Bodenbearbeitungsgeräten insbesondere drahtlos übermittelt und in dem jeweiligen Speicher eines Bodenbearbeitungsgerätes zur weiteren Verarbeitung durch die Steuereinheit des jeweiligen Bodenbearbeitungsgerätes abgelegt.

Der Arbeitsbereich der Bodenbearbeitungsgeräte wird durch einen Randbegrenzungsdraht begrenzt. Es kann vorteilhaft sein, andere Begrenzungen des Arbeitsbereiches vorzunehmen, z. B. durch Funkbaken, GPS-Navigation oder durch Kombination derartiger Systeme.

Nach einem Ausführungsbeispiel wird die Basisstation des Systems elektrisch an den Randbegrenzungsdraht angeschlossen und auf den Randbegrenzungsdraht ein Drahtsignal senden. Das elektromagnetische Feld des Drahtsignals induziert in einer Empfangsspule des Bodenbearbeitungsgerätes ein Empfangssignal, welches zur Steuerung des Bodenbearbeitungsgerätes mittels der Steuereinheit genutzt wird.

In bevorzugter Ausbildung der Erfindung ist das Bodenbearbeitungsgerät als Rasenmäher ausgebildet.

Weitere vorteilhafte Ausführungsbeispiele ergeben sich durch beliebige Kombination der angegebenen Merkmale vorstehender Ausführungsbeispiele. Es zeigen:
- Fig. 1: in schematischer Darstellung ein System aus mehreren selbstfahrenden Bodenbearbeitungsgeräten,
- Fig. 2: in schematischer Darstellung den Aufbau eines Bodenbearbeitungsgerätes am Beispiel eines selbstfahrenden Rasenmähers,
- Fig. 3: in schematischer Darstellung das Prinzip des Verfahrens zum Einrichten und Betrieb des Systems aus mehreren Bodenbearbeitungsgeräten,
- Fig. 4: in schematischer Darstellung das Prinzip nach Fig. 3 in alternativen Ausführungsformen.

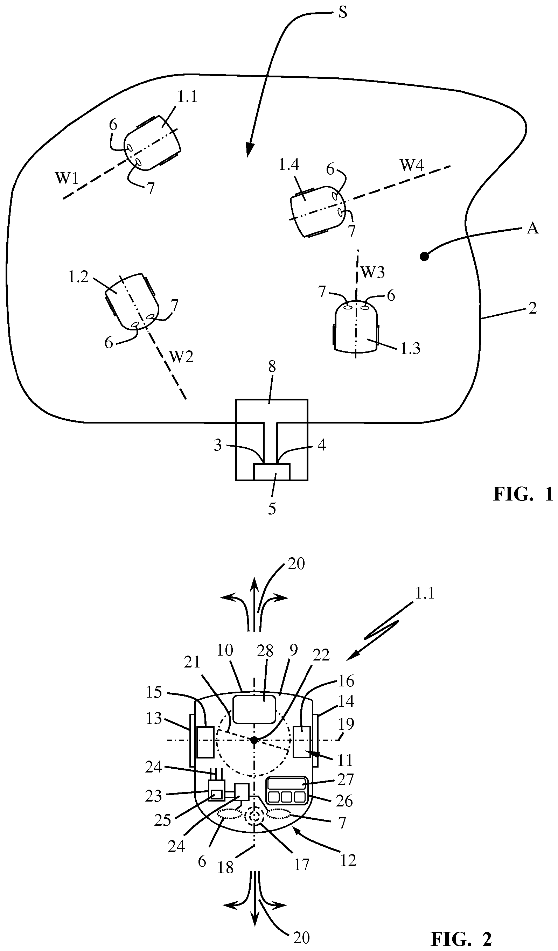

Das in Fig. 1 dargestellte System S aus selbstfahrenden Bodenbearbeitungsgeräten umfasst im Ausführungsbeispiel vier selbstfahrende Bodenbearbeitungsgeräte 1.1, 1.2, 1.3 und 1.4 zur gemeinsamen Bearbeitung eines vorgegebenen Arbeitsbereiches A. Jedes einzelne Bodenbearbeitungsgerät 1.1, 1.2, 1.3, 1.4 arbeitet autonom und fährt innerhalb des Arbeitsbereiches A selbstständig einen zufälligen Weg W1, W2, W3 und W4 autonom ab.

Im gezeigten Ausführungsbeispiel nach Fig. 1 ist der Arbeitsbereich A der Bodenbearbeitungsgeräte 1.1, 1.2, 1.3 und 1.4 durch einen Randbegrenzungsdraht 2 begrenzt, auf dem elektrische Signale aufgegeben sind. Der Randbegrenzungsdraht 2 ist als geschlossene Drahtschleife verlegt, wobei die Enden 3, 4 des Randbegrenzungsdrahtes 2 an eine Sendeeinheit 5 angeschlossen sind. Die Sendeeinheit 5 sendet - bevorzugt in zeitlich festen Abständen - elektrische Signale auf dem Randbegrenzungsdraht 2, die von Empfangsspulen 6 und 7 des Bodenbearbeitungsgerätes 1.1 bis 1.4 empfangen werden.

Die Sendeeinheit 5 ist Teil einer Basisstation 8, die mit den Bodenbearbeitungsgeräten 1.1, 1.2, 1.3 und 1.4 kommuniziert. Die Kommunikation zwischen der Basisstation 8 und den Bodenbearbeitungsgeräten kann vorteilhaft drahtlos über die Schleife des Randbegrenzungsdrahtes 2 erfolgen. Vorteilhaft ist auch eine drahtlose Kommunikationsverbindung zwischen der Basisstation 8 und den Bodenbearbeitungsgeräten 1.1 bis 1.4, z. B. als Funkstrecke oder dgl. Mögliche Funkstrecken können WLAN-Verbindungen, Bluetooth-Verbindungen, GSM-Verbindungen, NFC-Verbindungen oder dgl. Verbindungen sein.

In Fig. 2 ist in schematischer Draufsicht ein Bodenbearbeitungsgerät 1.1 gezeigt, welches als Rasenmäher 10 ausgebildet ist. Die Darstellung des autonom arbeitenden, selbstfahrenden Rasenmähers ist beispielhaft; das Bodenbearbeitungsgerät kann auch als Vertikutierer, Kehrmaschine, Staubsauger, autonomer Aufsitzmäher oder dgl. Bodenbearbeitungsgerät ausgebildet sein.

Das einen Rasenmäher 10 darstellende Bodenbearbeitungsgerät 1.1 besteht im Wesentlichen aus einem Fahrwerk mit hinteren Antriebsrädern 13, 14 mit einem Antrieb 11. Im gezeigten Ausführungsbeispiel ist jedem Antriebsrad 13, 14 ein elektrischer Antriebsmotor 15, 16 zugeordnet. Der Antrieb 11 besteht aus zwei voneinander unabhängig ansteuerbaren Elektromotoren. Im vorderen Bereich 12 des Gehäuses 9 ist ein insbesondere selbstlenkendes drittes Rad 17 vorgesehen. Das dritte Rad 17 liegt insbesondere auf einer Längsmittelachse 18 des Gehäuses 9. Die Ausbildung eines Fahrgestells mit vier Rädern kann zweckmäßig sein.

Die Antriebsräder 13, 14 des gezeigten Bodenbearbeitungsgerätes 1.1 drehen um eine gemeinsame Antriebsachse 19. Die Antriebsachse 19 liegt - in Draufsicht nach Fig. 2 - insbesondere rechtwinklig zur Längsmittelachse 18 des Gehäuses 9. Für eine Geradeausfahrt sind die Antriebsräder 13 und 14 über ihre elektrischen Antriebsmotoren 15 und 16 synchron anzutreiben. Für eine Kurvenfahrt werden die Antriebsräder 13, 14 durch ihre Antriebsmotoren 15, 16 mit unterschiedlichen Drehzahlen angetrieben. Durch den Antrieb ist das Bodenbearbeitungsgerät 1.1 in jeder gewünschten Fahrtrichtung 20 vorwärts oder rückwärts zu betreiben.

Im Ausführungsbeispiel als Rasenmäher 10 weist das Bodenbearbeitungsgerät 1.1 zwischen den Antriebsrädern 13 und 14 ein Arbeitswerkzeug 21 auf. Im Ausführungsbeispiel als Rasenmäher 10 ist das Arbeitswerkzeug 21 ein um eine senkrechte Drehachse 22 rotierendes Schneidmesser.

Die Steuerung der elektrischen Antriebsmotoren 15 und 16 erfolgt über eine Steuereinheit 23, die über schematisch angedeutete elektrische Leitungen 24 mit den elektrischen Antriebsmotoren 15 und 16 verbunden ist.

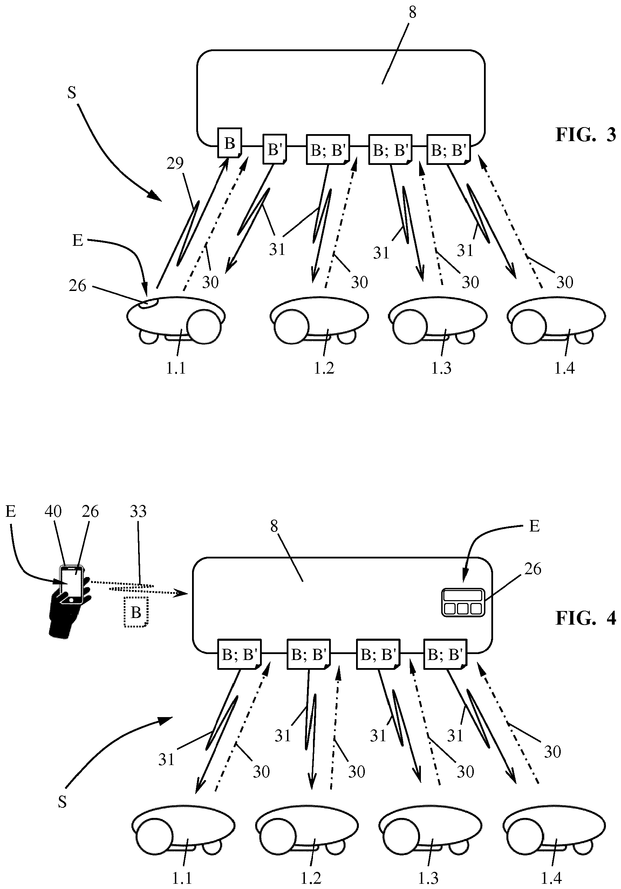

Das auf der Drahtschleife des Randbegrenzungsdrahtes 2 gesendete Signal wird in den Empfangsspulen 6 und 7 des Bodenbearbeitungsgerätes 1.1 empfangen, wobei die Empfangsspulen 6 und 7 im vorderen Bereich 12 des Gehäuses 9 jeweils auf einer Seite der Längsmittelachse 18 des Bodenbearbeitungsgerätes 1.1 angeordnet sind. Die Signale der Empfangsspulen 6 und 7 werden einer gemeinsamen Auswerteeinheit 24 zugeführt, die mit der Steuereinheit 23 verbunden ist. Vorteilhaft umfasst die Steuereinheit 23 einen Speicher 25 für eine Betriebsvariable B, B' (Figuren 3, 4), die zum Betrieb des Bodenbearbeitungsgerätes 1.1 zweckmäßig ist. Eine derartige Betriebsvariable kann z. B. die Startzeit des Betriebs sein, die Dauer des Betriebs, die Schnitthöhe (bei einer Ausbildung als Rasenmäher), der Fahrweg zu einer Ladestation, ein Mähplan als Wochenplan oder dgl.

In Fig. 2 ist zur Eingabe von Informationen zur Betriebsvariablen B ein Eingabefeld 26 vorgesehen, welches vorteilhaft einen Bildschirm 27 und Eingabetasten aufweist. Es kann zweckmäßig sein, den Bildschirm als Touchscreen auszubilden, so dass Eingabetasten entfallen können.

Die elektrische Versorgung der Steuereinheit 23 und aller ihrer Komponenten sowie des elektrischen Antriebs 11 wird durch einen Akku 28 gewährleistet, der bevorzugt in das Gehäuse 9 des Bodenbearbeitungsgerätes 1.1 eingeschoben ist.

Durch entsprechende Ansteuerung der Antriebsmotoren 15 und 16 verfährt die Steuereinheit 23 das Bodenbearbeitungsgerät 1.1 in dem zu bearbeitenden Arbeitsbereich A. Jedes Bodenbearbeitungsgerät 1.1, 1.2, 1.3 und 1.4 des Systems S arbeitet autonom entsprechend der Information der Betriebsvariablen B, die bevorzugt im Speicher 25 eines jeden Bodenbearbeitungsgerätes 1.1 abgelegt ist.

Wie Fig. 1 zeigt, fährt jedes Bodenbearbeitungsgerät 1.1, 1.2, 1.3 und 1.4 einen eigenen, zufälligen Weg W1, W2, W3, W4. Im Betrieb werden die Informationen der mitgeteilten Betriebsvariablen B berücksichtigt.

Zum Einrichten und Betrieb des Systems S aus mehreren Bodenbearbeitungsgeräten, im Ausführungsbeispiel vier Bodenbearbeitungsgeräte 1.1, 1.2, 1.3 und 1.4, wird nach einer ersten Ausführungsform der Erfindung die Information der Betriebsvariablen B über das Eingabefeld 26 an einem ersten Bodenbearbeitungsgerät 1.1 eingegeben. Dies ist schematisch in Fig. 3 gezeigt. Die Eingabe E aller Informationen für die Betriebsvariable B erfolgt beispielhaft am Bodenbearbeitungsgerät 1.1. Die Information über die in dem Bodenbearbeitungsgerät 1.1 abgelegte Betriebsvariable B wird insbesondere drahtlos an die anderen Bodenbearbeitungsgeräte 1.2, 1.3 und 1.4 übertragen. Damit ist jedes Bodenbearbeitungsgerät 1.1, 1.2, 1.3 und 1.4 betriebsbereit und fährt innerhalb des Arbeitsbereiches A unabhängig von einem anderen Bodenbearbeitungsgerät unter Verwendung der empfangenen Betriebsvariablen B autonom einen zufälligen Weg W1, W2, W3 und W4 ab. Während des Betriebs des Systems S aus den im Beispiel vier Bodenbearbeitungsgeräten 1.1, 1.2, 1.3 und 1.4 wird das Verhalten eines einzelnen Bodenbearbeitungsgerätes in Abhängigkeit von Änderungen der Betriebsvariablen B angepasst. Zweckmäßig melden die einzelnen Bodenbearbeitungsgeräte 1.1, 1.2, 1.3 und 1.4 über eine insbesondere drahtlose Funkstrecke 30 ihren aktuellen Betriebszustand an die Basisstation 8, welche in Abhängigkeit von den gemeldeten Betriebszuständen die Informationen zur Betriebsvariablen B anpasst. Diese angepasste Betriebsvariable B' wird dann allen Bodenbearbeitungsgeräten 1.1, 1.2, 1.3 und 1.4 des Systems S mitgeteilt, wodurch der weitere Betrieb der einzelnen, autonom arbeitenden Bodenbearbeitungsgeräte 1.1, 1.2, 1.3 und 1.4 der angepassten Betriebsvariablen B' entsprechend durchgeführt wird.

Fällt z. B. ein Bodenbearbeitungsgerät aus, z. B. weil der Akku geladen werden muss, meldet dieses Bodenbearbeitungsgerät der Basisstation 8 einen leeren Akku. Die Basisstation 8 kann nun die aktuelle Betriebsvariable B derart anpassen, dass weiterhin das gewünschte Arbeitsergebnis in der vorgesehenen Zeit erreicht wird. Fällt z. B. bei einem System aus selbstfahrenden Rasenmähern ein Rasenmäher aus, wird die Basisstation 8 die Mähzeiten der verbleibenden Rasenmäher erhöhen und als geänderte Betriebsvariable B' den einzelnen Rasenmähern übermitteln.

In einfacher Weise können die Informationen zur Betriebsvariablen B über das Eingabefeld 26 eines Bodenbearbeitungsgerätes 1.1 (Fig. 2) eingegeben werden. Wie Fig. 3 schematisch zeigt, werden die in das Eingabefeld 26 beim Bodenbearbeitungsgerät 1.1 vorgenommenen Eingaben E drahtlos über eine Funkstrecke 29 der Basisstation 8 mitgeteilt. Die Basisstation 8 gibt die eingegebenen Informationen zur Betriebsvariablen B an die weiteren Bodenbearbeitungsgeräte des Systems S weiter. Hierzu ist die Basisstation 8 über drahtlose Funkstrecken 31 mit den Bodenbearbeitungsgeräten 1.2, 1.3 und 1.4 des Systems S verbunden.

Über die Funkstrecken 30 melden alle Bodenbearbeitungsgeräte 1.1, 1.2, 1.3 und 1.4 ihren Betriebszustand der Basisstation 8. Die Basisstation 8 überwacht das System S und passt bei Ausfall eines Bodenbearbeitungsgerätes die Betriebsvariable B zu einer angepassten Betriebsvariablen B' an, die dann über die Funkstrecken 31 allen Bodenbearbeitungsgeräten des Teams übermittelt wird. Die Funkstrecken 30 und 31 können getrennte Funkstrecken mit unterschiedlichen Funkprotokollen wie NFC, Bluetooth, WLAN, GSM oder dgl. sein.

Wie in Fig. 4 dargestellt, kann es zweckmäßig sein, an der Basisstation ein Eingabefeld 26 vorzusehen. Die Eingabe E der Informationen zur Betriebsvariablen der Bodenbearbeitungsgeräte 1.1, 1.2, 1.3 und 1.4 des Systems S werden vom Benutzer am Eingabefeld 26 der Basisstation 8 eingegeben und über die Funkstrecken 31 an die Mitglieder des Systems S verteilt. Die Anpassung der Betriebsvariablen B zu einer angepassten Betriebsvariable B' und deren Verteilung auf die einzelnen Bodenbearbeitungsgeräte 1.1, 1.2, 1.3 und 1.4 des Systems S erfolgt in gleicher Weise wie zur Fig. 3 beschrieben über eine Funkstrecke 31.

Es kann vorteilhaft sein, die Informationen zur Betriebsvariablen B über eine manuelle Eingabe E auf einem externen Eingabegerät 40 wie beispielsweise einem Smartphone einzugeben, wie in Fig. 4 punktiert dargestellt ist. Das externe Eingabegerät 40 kommuniziert drahtlos mit der Basisstation 8 und übermittelt die manuell auf dem Eingabegerät eingegebenen Informationen zur Betriebsvariablen. Die drahtlose Funkstrecke 33 zwischen dem Eingabegerät 40 und der Basisstation 8 kann eine WLAN-Funkverbindung, eine Bluetooth-Funkverbindung, eine NFC-Funkverbindung (Near Field Communication) oder dgl. drahtlose Funkverbindung zur Übermittlung von Daten sein. Das externe Eingabegerät 40 kann ein mobiles Endgerät wie beispielsweise ein Tablet-PC, eine Smartwatch, ein Smartphone oder dgl. sein. Das externe Eingabegerät 40 kann alternativ auch ein stationäres Eingabegerät wie beispielsweise ein PC sein. Auch andere Eingabegeräte 40 können vorteilhaft sein. In dem externen Eingabegerät 40 ist ein Programm, insbesondere eine Benutzer-App, gespeichert, über die die Informationen zur Betriebsvariablen B eingegeben werden können. Die Eingabe kann vorteilhaft über ein Eingabefeld 26 wie beispielsweise einen Touchscreen oder eine Tastatur erfolgen.

Wird - wie in Fig. 1 dargestellt - ein Randbegrenzungsdraht 2 verwendet, auf den von einer Sendeeinheit 5 elektrische Signale aufgegeben werden, kann die Kommunikation der einzelnen Bodenbearbeitungsgeräte 1.1, 1.2, 1.3 und 1.4 mit der Basisstation 8 auch über den Randbegrenzungsdraht 2 erfolgen. Die Betriebsvariable B kann von der Sendeeinheit 5 über den Randbegrenzungsdraht 2 auf das System S verteilt werden. Auch kann die Ausbildung des Systems S so erfolgen, dass mittels einer Sendespule in einem Bodenbearbeitungsgerät Zustandsinformationen des Bodenbearbeitungsgerätes über den Randbegrenzungsdraht der Basisstation 8 übermittelt werden. Die Sendeeinheit 5 ist dann zweckmäßig als Sende-/Empfangseinheit ausgebildet.

## Patentansprüche

1. Verfahren zum Einrichten und Betrieb eines Systems (S) aus einer Basisstation (8) und mindestens einem ersten und einem zweiten selbstfahrenden Bodenbearbeitungsgerät (1.1, 1.2, 1.3, 1.4) zur gemeinsamen Bearbeitung eines vorgegebenen Arbeitsbereichs (A), wobei ein einzelnes Bodenbearbeitungsgerät (1.1, 1.2, 1.3, 1.4) ausgebildet ist, innerhalb des Arbeitsbereichs (A) selbstständig einen zufälligen Weg (W1, W2, W3, W4) abzufahren, und jedes Bodenbearbeitungsgerät (1.1, 1.2, 1.3, 1.4) als Rasenmäher (10) ausgebildet ist und einen Antrieb (11), eine Steuereinheit (23) und einen geräteeigenen Akku (28) zur Energieversorgung des Bodenbearbeitungsgerätes (1.1, 1.2, 1.3, 1.4) aufweist, und der Arbeitsbereich (A) des Bodenbearbeitungsgerätes (1.1, 1.2, 1.3, 1.4) durch einen Randbegrenzungsdraht (2) begrenzt ist, und jede Steuereinheit (23) eines Bodenbearbeitungsgerätes (1.1, 1.2, 1.3, 1.4) einen Speicher (25) umfasst, der geeignet ist, zumindest eine Betriebsvariable (B, B') in Form der Startzeit des Betriebs, der Dauer des Betriebs, der Schnitthöhe bei einem Rasenmäher, des Fahrwegs zu einer Ladestation, eines Mähplans eines Rasenmähers als Wochenplan oder dgl. Abzuspeichern, wobei die Information zur Betriebsvariablen (B, B') über ein Eingabefeld (26) eines externen Eingabegeräts (40) eingegeben und von dem Eingabegerät (40) über eine drahtlose Funkstrecke (33) von dem Eingabegerät (40) der Basisstation (8) übermittelt werden, und das externe Eingabegerät (40) ein mobiles Endgerät wie beispielsweise ein Smartphone, ein Tablet-PC oder eine Smartwatch sein kann, und in dem externen Eingabegerät (40) eine Benutzer-App gespeichert ist, die geeignet ist zur Eingabe der Information zur Betriebsvariablen (B), wobei die Basisstation (8) ausgebildet ist für eine drahtlose Kommunikation mit den Bodenbearbeitungsgeräten (1.1 bis 1.4), und dass zur Einrichtung und Inbetriebnahme des Systems (S) die Information zur Betriebsvariablen (B, B') über das Eingabefeld (26) des externen Eingabegeräts (40) eingegeben und der Basisstation (8) übermittelt werden, und die Basisstation (8) ausgebildet ist, eine Information über einen in einem ersten Bodenbearbeitungsgerät (1.1, 1.2, 1.3, 1.4) abgelegte Information einer Betriebsvariable (B) selbständig an weitere wie das zweite Bodenbearbeitungsgerät (1.1, 1.2, 1.3, 1.4) zu übertragen, und im Betrieb des Systems das erste Bodenbearbeitungsgerät (1.1, 1.2) unabhängig von dem zweiten Bodenbearbeitungsgerät (1.3, 1.4) unter Verwendung der Information der Betriebsvariablen (B) autonom einen zufälligen Weg (W) innerhalb des Arbeitsbereiches (A) abfährt, und dass während dem Betrieb des Systems (S) aus mehreren Bodenbearbeitungsgeräten (1.1, 1.2, 1.3, 1.4) die einzelnen Bodenbearbeitungsgeräte (1.1, 1.2, 1.3 und 1.4) ihren aktuellen Betriebszustand an die Basisstation (8) melden, welche in Abhängigkeit von den gemeldeten Betriebszuständen die Informationen zur Betriebsvariablen (B) anpasst, und dass während dem Betrieb des Systems (S) aus mehreren Bodenbearbeitungsgeräten (1.1, 1.2, 1.3, 1.4) das Verhalten eines einzelnen Bodenbearbeitungsgerätes (1.1, 1.2, 1.3, 1.4) in Abhängigkeit von Änderungen der Informationen der Betriebsvariablen (B) über WLAN, NFC, Bluetooth, GSM oder dgl. Funkstandards angepasst wird, wobei die Basisstation (8) ausgebildet ist, die Information der aktuellen Betriebsvariablen (B) in Abhängigkeit von gemeldeten Betriebszuständen eines ersten Bodenbearbeitungsgerätes (1.1, 1.2, 1.3, 1.4) in eine angepasste Information der Betriebsvariablen (B') zu ändern, und die von der Basisstation (8) angepassten Information der Betriebsvariablen dem im System arbeitenden zweiten Bodenbearbeitungsgerät (1.1, 1.2, 1.3, 1.4) drahtlos zu übermitteln.

2. Verfahren nach Anspruch 1,
**dadurch gekennzeichnet, dass** die Information der Betriebsvariablen (B, B') für den Betrieb des Bodenbearbeitungsgerätes (1.1, 1.2, 1.3, 1.4) in dem Speicher (25) des Bodenbearbeitungsgerätes (1.1, 1.2, 1.3, 1.4) abgelegt wird.

3. Verfahren nach Anspruch 1,
**dadurch gekennzeichnet, dass** die einzelnen Bodenbearbeitungsgeräte (1.1, 1.2, 1.3, 1.4) ihren aktuellen Betriebszustand einer Basisstation (8) als gemeldeten Betriebszustand melden.

4. Verfahren nach Anspruch 1,
**dadurch gekennzeichnet, dass** die Information der angepassten Betriebsvariablen (B') in dem jeweiligen Speicher (25) eines Bodenbearbeitungsgerätes (1.1, 1.2, 1.3, 1.4) zur weiteren Verarbeitung durch die Steuereinheit (23) des Bodenbearbeitungsgerätes (1.1, 1.2, 1.3, 1.4) abgelegt wird.

5. Verfahren nach Anspruch 1,
**dadurch gekennzeichnet, dass** die Basisstation (8) des Systems (S) ausgebildet ist, elektrisch an den Randbegrenzungsdraht (2) angeschlossen zu werden und ein Drahtsignal auf dem Randbegrenzungsdraht (2) zu senden, wobei das elektromagnetische Feld des Drahtsignals in einer Empfangsspule (6, 7) des Bodenbearbeitungsgerätes (1.1, 1.2, 1.3, 1.4) ein Empfangssignal induziert, und die Steuereinheit ausgebildet ist, das Empfangssignal zur Steuerung des Bodenbearbeitungsgerätes (1.1, 1.2, 1.3, 1.4) in der Steuereinheit (23) zu verarbeiten.

## Claims

1. Method for setting up and operating a system (S) consisting of a base station (8) and at least a first and a second self-propelled ground-working device (1.1, 1.2, 1.3, 1.4) for collectively working a predefined work area (A), wherein an individual ground-working device (1.1, 1.2, 1.3, 1.4) is designed to independently travel along a random path (W1, W2, W3, W4) within the work area (A), and each ground-working device (1.1, 1.2, 1.3, 1.4) is in the form of a lawnmower (10) and has a drive (11), a control unit (23) and a rechargeable battery (28) on board the device for supplying energy to the ground-working device (1.1, 1.2, 1.3, 1.4), and the work area (A) of the ground-working device (1.1, 1.2, 1.3, 1.4) is bounded by an edge boundary wire (2), and each control unit (23) of a ground-working device (1.1, 1.2, 1.3, 1.4) comprises a memory (25) which is suitable for storing at least one operating variable (B, B') in the form of the starting time of operation, the duration of operation, the cutting height in the case of a lawnmower, the route to a charging station, a mowing schedule of a lawnmower as a weekly schedule, or the like, wherein the information relating to the operating variables (B, B') is input via an input field (26) of an external input device (40) and transmitted by the input device (40) via a wireless radio link (33) from the input device (40) to the base station (8), and the external input device (40) can be a mobile terminal, such as, for example, a smartphone, a tablet PC or a smartwatch, and the external input device (40) stores a user app which is suitable for inputting the information relating to the operating variables (B), wherein the base station (8) is designed for wireless communication with the ground-working devices (1.1 to 1.4), and in that in order to set up and put the system (S) into operation the information relating to the operating variables (B, B') is input via the input field (26) of the external input device (40) and transmitted to the base station (8), and the base station (8) is designed to independently transmit information about information stored in a first ground-working device (1.1, 1.2, 1.3, 1.4) relating to an operating variable (B) to further ground-working devices (1.1, 1.2, 1.3, 1.4), such as the second ground-working device, and, during operation of the system, the first ground-working device (1.1, 1.2) uses the information relating to the operating variables (B) to autonomously travel along a random path (W) within the work area (A) independently of the second ground-working device (1.3, 1.4), and in that, during operation of the system (S) consisting of a plurality of ground-working devices (1.1, 1.2, 1.3, 1.4), the individual ground-working devices (1.1, 1.2, 1.3 and 1.4) report their present operating state to the base station (8), which adapts the information relating to the operating variables (B) on the basis of the reported operating states, and in that, during operation of the system (S) consisting of a plurality of ground-working devices (1.1, 1.2, 1.3, 1.4), the behaviour of an individual ground-working device (1.1, 1.2, 1.3, 1.4) is adapted on the basis of changes in the information relating to the operating variables (B) using WLAN, NFC, Bluetooth, GSM or similar radio standards, wherein the base station (8) is designed to change the information relating to the present operating variables (B) into adapted information relating to the operating variables (B') on the basis of reported operating states of a first ground-working device (1.1, 1.2, 1.3, 1.4), and to wirelessly transmit the information relating to the operating variables that was adapted by the base station (8) to the second ground-working device (1.1, 1.2, 1.3, 1.4) operating in the system.

2. Method according to Claim 1,
**characterized in that** the information relating to the operating variables (B, B') is stored in the memory (25) of the ground-working device (1.1, 1.2, 1.3, 1.4) for operating the ground-working device (1.1, 1.2, 1.3, 1.4).

3. Method according to Claim 1,
**characterized in that** the individual ground-working devices (1.1, 1.2, 1.3, 1.4) report their present operating state to a base station (8) in the form of a reported operating state.

4. Method according to Claim 1,
**characterized in that** the information relating to the adapted operating variables (B') is stored in the respective memory (25) of a ground-working device (1.1, 1.2, 1.3, 1.4) for further processing by the control unit (23) of the ground-working device (1.1, 1.2, 1.3, 1.4).

5. Method according to Claim 1,
**characterized in that** the base station (8) of the system (S) is designed to be electrically connected to the edge boundary wire (2) and to send a wire signal on the edge boundary wire (2), wherein the electromagnetic field of the wire signal induces a received signal in a reception coil (6, 7) of the ground-working device (1.1, 1.2, 1.3, 1.4), and the control unit is designed to process the received signal in the control unit (23) in order to control the ground-working device (1.1, 1.2, 1.3, 1.4).

## Revendications

1. Procédé pour mettre en place et faire fonctionner un système (S) composé d'une station de base (8) et d'au moins un premier et un deuxième appareil de traitement du sol (1.1, 1.2, 1.3, 1.4) automoteur en vue d'un traitement en commun d'une zone de travail (A) prédéfinie, un appareil de traitement du sol (1.1, 1.2, 1.3, 1.4) individuel étant configuré pour parcourir de manière autonome un chemin aléatoire (W1, W2, W3, W4) à l'intérieur de la zone de travail (A), et chaque appareil de traitement du sol (1.1, 1.2, 1.3, 1.4) étant réalisé sous la forme d'une tondeuse à gazon (10) et possédant un mécanisme d'entraînement (11), une unité de commande (23) et un accumulateur (28) propre à l'appareil servant à l'alimentation en énergie de l'appareil de traitement du sol (1.1, 1.2, 1.3, 1.4), et la zone de travail (A) de l'appareil de traitement du sol (1.1, 1.2, 1.3, 1.4) étant délimitée par un fil de délimitation de bordure (2), et chaque unité de commande (23) d'un appareil de traitement du sol (1.1, 1.2, 1.3, 1.4) comprenant une mémoire (25), laquelle est adaptée pour mémoriser au moins une variable de fonctionnement (B, B') sous la forme de l'heure de début du fonctionnement, de la durée du fonctionnement, de la hauteur de coupe dans le cas d'une tondeuse à gazon, du trajet jusqu'à une station de charge, d'un plan de tonte d'une tondeuse à gazon sous la forme d'un plan hebdomadaire ou similaire, l'information à propos des variables de fonctionnement (B, B') étant saisie par le biais d'un champ de saisie (26) d'un appareil de saisie (40) externe et communiquée par l'appareil de saisie (40) par le biais d'une liaison radioélectrique (33) sans fil depuis l'appareil de saisie (40) à la station de base (8), et l'appareil de saisie (40) externe pouvant être un terminal mobile, comme par exemple un Smartphone, une tablette informatique ou une montre connectée, et une application d'utilisateur étant enregistrée dans l'appareil de saisie (40) externe, laquelle est adaptée à la saisie de l'information à propos des variables de fonctionnement (B), la station de base (8) étant configurée pour une communication sans fil avec les appareil de traitement du sol (1.1 à 1.4), et en ce qu'en vue de mettre en place et faire fonctionner le système (S), l'information à propos des variables de fonctionnement (B, B') étant saisie par le biais du champ de saisie (26) de l'appareil de saisie (40) externe et communiquée à la station de base (8), et la station de base (8) étant configurée pour transmettre une information à propos d'une information d'une variable de fonctionnement (B) stockée dans un premier appareil de traitement du sol (1.1, 1.2, 1.3, 1.4) automatiquement à un autre, comme le deuxième appareil de traitement du sol (1.1, 1.2, 1.3, 1.4), et durant le fonctionnement du système, le premier appareil de traitement du sol (1.1, 1.2) parcourant de manière autonome un chemin aléatoire (W) à l'intérieur de la zone de travail (A) indépendamment du deuxième appareil de traitement du sol (1.3, 1.4) en utilisant l'information des variables de fonctionnement (B), et en ce que pendant le fonctionnement du système (S) composé de plusieurs appareils de traitement du sol (1.1, 1.2, 1.3, 1.4), les appareils de traitement du sol (1.1, 1.2, 1.3 et 1.4) individuels signalant leur état de fonctionnement actuel à la station de base (8), laquelle adapte les informations à propos des variables de fonctionnement (B) en fonction des états de fonctionnement signalés, et ce que pendant le fonctionnement du système (S) composé de plusieurs appareils de traitement du sol (1.1, 1.2, 1.3, 1.4), le comportement d'un appareil de traitement du sol (1.1, 1.2, 1.3, 1.4) individuel étant adapté par le biais d'une norme de radiocommunication WLAN, NFC, Bluetooth, GSM ou similaire en fonction des modifications des informations des variables de fonctionnement (B), la station de base (8) étant configurée pour modifier l'information des variables de fonctionnement (B) actuelles en fonction des états de fonctionnement signalés d'un premier appareil de traitement du sol (1.1, 1.2, 1.3, 1.4) en une information adaptée des variables de fonctionnement (B'), et communiquer sans fil l'information des variables de fonctionnement adaptée par la station de base (8) au deuxième appareil de traitement du sol (1.1, 1.2, 1.3, 1.4) qui travaille dans le système.

2. Procédé selon la revendication 1,
**caractérisé en ce que** l'information des variables de fonctionnement (B, B') pour le fonctionnement de l'appareil de traitement du sol (1.1, 1.2, 1.3, 1.4) est stockée dans la mémoire (25) de l'appareil de traitement du sol (1.1, 1.2, 1.3, 1.4).

3. Procédé selon la revendication 1,
**caractérisé en ce que** les appareils de traitement du sol (1.1, 1.2, 1.3, 1.4) individuels signalent leur état de fonctionnement actuel à une station de base (8) en tant qu'état de fonctionnement signalé.

4. Procédé selon la revendication 1,
**caractérisé en ce que** l'information des variables de fonctionnement adaptées (B') est stockée dans la mémoire (25) respective d'un appareil de traitement du sol (1.1, 1.2, 1.3, 1.4) en vue d'un traitement ultérieur par l'unité de commande (23) de l'appareil de traitement du sol (1.1, 1.2, 1.3, 1.4).

5. Procédé selon la revendication 1,
**caractérisé en ce que** la station de base (8) du système (S) est configurée pour être raccordée électriquement au fil de délimitation de bordure (2) et émettre un signal de fil sur le fil de délimitation de bordure (2), le champ électromagnétique du signal de fil induisant un signal de réception dans une bobine de réception (6, 7) de l'appareil de traitement du sol (1.1, 1.2, 1.3, 1.4) et l'unité de commande étant configurée pour traiter le signal reçu dans l'unité de commande (23) en vue de commander l'appareil de traitement du sol (1.1, 1.2, 1.3, 1.4).
